# EUROPEAN PATENT SPECIFICATION

(11) **EP 0 843 287 B1**
(45) Date of publication and mention of the grant of the patent: **22.02.2006**
(21) Application number: 97117724.1
(22) Date of filing: 14.10.1997
(51) Int. Cl.: G07F 15/00, G07F 7/08

(54) **Improvements in or relating to modular gas meters**
Verbesserungen für und in Bezug auf modulare Gaszähler
Perfectionnements dans et relatifs aux compteurs à gaz

(30) Priority: 16.11.1996 GB 9623844; 09.12.1996 GB 9625521
(43) Date of publication of application: 20.05.1998
(73) Proprietor: Landis+Gyr Limited, Telford Shropshire TF1 7YG (GB)
(72) Inventor: Day, Steven, Lostock, Bolton BL6 4LW (GB)
(74) Representative: Humphrey-Evans, Edward John

(56) References cited:
- EP-A- 0 419 106
- WO-A-96/03720
- FR-A- 2 666 675
- GB-A- 2 207 269

## Description

The present invention relates to gas meters and more especially it relates to modular gas meters.

Modular gas meters comprise a base meter unit to which add-on modules may be selectively fitted to extend or modify functionality. Thus, a base meter unit is provided which may be contiguously combined with various alternative add-on modules, so as to provide for various different functions such as pre-payment facilities, remote meter reading, or credit meter facilities for example.

In a modular meter, a gas valve is normally provided in the base meter unit which is controlled in accordance with signals generated in an add-on module combined therewith. Thus, in a pre-payment meter, for example, the gas valve and the base meter unit is opened or closed in accordance with the provision of pre-payment tokens, or the like, which can be fed into the add-on module.

It will be apparent that when credit becomes exhausted, gas will be turned off, and will be turned on again only after the provision of appropriate credit tokens. Thus, when a gas supply resumed after a period of disconnection, gas burners or other appliances may be inadvertently left on, which represents a possible safety hazard. To overcome this problem a modular gas meter comprising a safe to open circuit has been designed and which forms the basis of our co-pending patent application number GB 9524684.9 which may be referred to for further information. Other modular commodity metering systems are described for example in the following patents: GB 2 207 269 and EP 0 419 106.

The electronic circuitry provided in such gas meter base units is powered by an internal battery, and this circuitry can cause excessive drain upon the battery if the circuitry is continuously organised to monitor a given event to cause operation of the shut-off valve to close off the gas supply.

To overcome this problem the add-on module can be provided with means for providing parameters which dictate when the shut-off valve should be operated, thereby allowing the electronic circuitry in the base meter unit to monitor a given event without any frequent communication with the add-on module and thereby save battery power and prolong the life of the battery in the base meter unit.

According to the present invention there is provided a modular gas meter comprising add-on module and a base meter unit, including a gas shut-off valve, a gas flow measurement arrangement and a gas shut-off valve control system, including a first communication interface which facilitates the transmission of control data to or from the control system, which base meter unit is adapted to be operatively combined with the add-on module so as to extend meter functionality, which add-on module comprises a module control system operative to control functionality and which includes a second communication interface via which communication signals are passed to control the operation of the base meter unit, characterised in that the add-on module is arranged to calculate a shut-off volume index value which is communicated to the base meter unit which monitors this value against a current volume index value and is arranged to activate the shut-off valve to close off the gas supply when the current volume index value equals or exceeds the shut-off volume index value.

The communication interface may be an optical interface.

In accordance with another aspect of the invention there is provided a method of controlling a modular gas meter having a base meter unit and an add-on module, communication between which is arranged over a communication interface, the method comprising the steps of:-
(a) causing the add-on module to send a command response to the base meter unit, and if the command format and structure is correct the base meter unit allows the command to continue and the base meter unit responds to the volume index threshold shut-off command and allows the threshold shut-off value to be stored within the base meter unit, and,
(b) causing the base meter unit to check the current volume index value with the threshold shut-off value stored and when the current volume index value is the same as the stored value or greater than the stored value the base meter unit causes the shut-off valve to operate thereby closing the gas supply.

An embodiment of the present invention will now be described with reference to the accompanying drawings wherein,
FIGURE 1 shows a schematic diagram of a base meter unit including an add-on module, and
FIGURE 2 shows a number of communication commands or messages.

Referring to the drawings, the gas meter comprises a base meter unit 1, which is operatively associated with and contiguously combined with an add-on module 2. The add-on module 2 provides additional functionality, for example a pre-payment facility 10. The base meter unit comprises a flow measurement system 3, in dependence upon which a display 4 is operated which provides a indication of the volume of gas consumed. The measurement system 3 operates under control of a base meter unit control system 5, which serves also to control operation of a shut-off gas valve 6. In order to provide for communication between the base meter unit 1 and the add-on module 2, a pair of optical interfaces 7, 8 are provided, which facilitates communication between the base meter unit control system 5 and the add-on module control system 9. Although in this embodiment two optical interfaces are provided, in an alternative embodiment it is contemplated that a single optical interface may be used for the same purpose.

Although the add-on module is shown having a prepayment token receiver 10, it will be appreciated that this module could be used to provide any function.

The add-on module 2 also includes a safe to open button 13 which passes a signal via a trigger line 14 to the central processor unit 9 so that the gas shut-off valve 6 is only caused to open after the safe to open button has been depressed.

In practice the energy to operate the valve is derived from a battery (not shown) but it will be appreciated that other power sources may be used which may be derived from electrical or mechanical means derived from the gas or other means internal or external to the base meter unit.

The valve 6 may be caused to close by signals received from internal or external means but the valve can only be caused to be opened by an external signal for safety reasons and that is by means of the safe to open button 13 as mentioned previously. The external control signals which are used to control the valve and are passed via the optical link, but it will be appreciated that this link could be replaced by other transmission mediums such as electronic, galvanic or magnetic mediums.

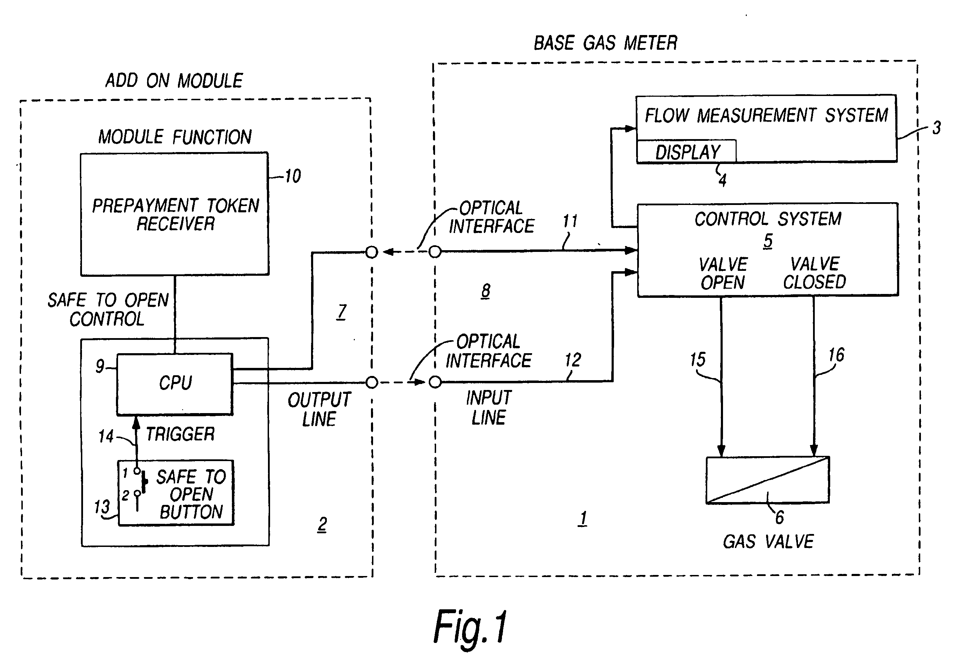

The base meter unit can close the valve 6 under its own initiative triggered from events and conditions within the base meter unit. Alternatively an external device or module such as that shown in Figure 1 which includes a pre-payment token receiver 10, may be used to send compatible communication signals to the base meter unit to cause the base meter unit to close the valve when, for example, the pre-payment amount has been exhausted.

In accordance with the present invention the add-on module 2 may be arranged to generate a volume index threshold shut-off value. This value can be determined by the central processing unit 9 and is transmitted over the optical interface to the base meter unit 1 and is stored within its control system 5 which is arranged to check the value with the current volume index threshold value monitored by the base meter unit and is caused to generate a signal to close the gas valve 6 when the current value is equal to or exceeds that value which has been received over the optical communications link from the add-on module 2.

The add-on module 2 may also be arranged to obtain the current values of the volume index, shut-off volume index, valve status (open, close) through the same communication interface.

The volume index threshold shut-off procedure will now be described in greater detail. A security protocol may be used for requesting this mode via the optical communications interface.

This procedure uses the IEC1107 optical protocol and in the described format SOH represents Start of Header, R1 represents Read Type 1, STX represents Start of Text, ETX represents End of Text, BCC represent a Block Check Character and W1 represents Write Type 1.

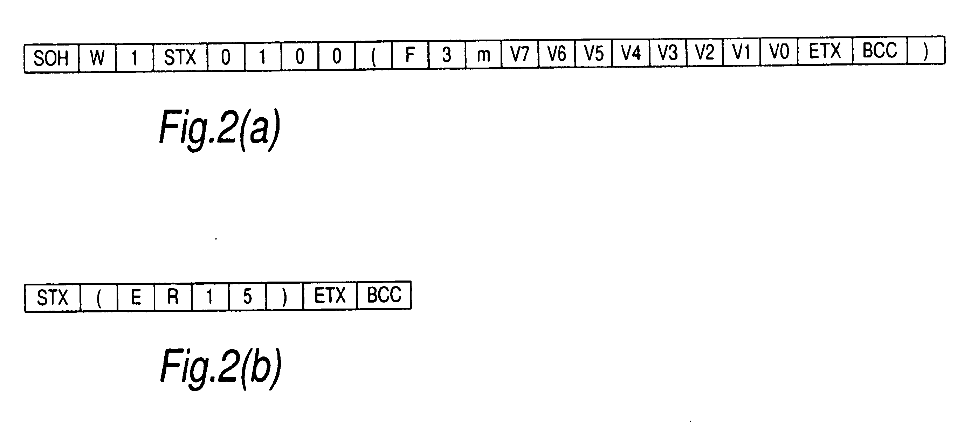

The add-on module 2 sends a command shown as message (a) in Figure 2. Only if the format and structure is correct, will the base meter unit allow the command to continue. A message of this type could include a security response. The base meter unit will respond to the volume index threshold shut-off demand in accordance with message (a).

In this message F3 represents a code sent to implement volume threshold shut-off, m represents a disable or enable mode, and the v7 to v0 represents the shut-off volume.

Under normal circumstances the base meter unit 1 would have the add-on module 2 registered therewith. If the base meter unit has the module registered, and the format and structure of the volume index shut-off message is correct, including security and block check features, the base meter unit responds with an acknowledgement character ACK and accepts the new volume index shut-off value.

If the base meter unit has no module registered or the command format and structure, including security and block check features is incorrect, the base meter unit will respond with an error message (b) as shown in Figure 2, and the base meter unit will not accept the new volume index shut-off value.

If the mode is enabled, the valve closure procedure will be initiated when the volume index crosses the present threshold. This is intended primarily for pre-payment applications. If the base meter unit threshold value is less than the current volume index value then the base meter unit will allow the meter volume index to roll over from 99999 999 999 to 00000 000 000 before continuing with the comparison of the index with the threshold value. This allows a threshold to be set when the main index volume index is close to a roll over situation.

It will be appreciated that in accordance with the present invention the shut-off point is unambiguously defined as a value and held within the base meter unit. This is a significant improvement on other methods where pulse signals are sent continuously from a base meter unit to an add-on module or external device wherein errors may be introduced by failure to record all the pulses sent. Furthermore the integrity of the metering system is improved because no signal communication needs to be monitored external to the base meter unit to effect closure of the shut-off valve.

## Claims

1. A modular gas meter comprising a base meter unit (1) and an add-on module (2), including a shut-off gas valve (6), a gas flow measurement arrangement (3) and a gas shut-off valve control system (5), including a first communication interface (8) which facilitates the transmission of control data to or from the control system (5), which base meter unit (1) is adapted to be operatively combined with the add-on module (2), so as to extend the meter functionality, which add-on module comprises a module control system operative to control functionality and which includes a second communication interface (7) via which communication signals are passed to control the operation of the base meter unit, **characterised in that** the add-on module is arranged to calculate a shut-off volume index value which value is communicated to the base meter unit (1), which monitors this value against a current volume index value and is arranged to activate the shut-off valve (6) to close off the gas supply when the current volume index value equals or exceeds the shut-off volume index value.

2. A modular gas meter as claimed in claim one, wherein the communication interface is an optical interface.

3. A method of controlling a modular gas meter having a base meter unit (1) and an add-on module (2), communication between which is arranged over a communication interface, the method comprising the steps of:-
(a) causing the add-on module (2) to send a command to the base meter unit (1), and if the command format and structure is correct, the base meter unit (1) allows the command to continue and the base meter unit (1) responds to the volume index threshold shut-off command and allows the threshold shut-off value to be stored within the base meter unit (2), and,
(b) causing the base meter unit (1) to check the current volume index value with the threshold shut-off value stored and when the current volume index value is the same as the stored value or greater than the stored value, the base meter unit causes the shut-off valve (6) to activate thereby closing the gas supply.

4. A method of controlling a modular gas meter as claimed in claim 3, wherein the add-on module (2) is caused to be registered with the base meter unit and before the volume index threshold shut-off value is accepted, a check is made to ascertain whether the add-on module is registered with the base meter unit (1) and if it is not so registered therewith the volume index shut of procedure is not implemented.

5. A base meter unit (1) as defined in the modular gas meter claimed in claim 1.

6. An add-on meter module (2) as defined in the modular gas meter claimed in claim 1.

## Patentansprüche

1. Modularer Gaszähler, welcher eine Basiszählereinheit (1) und einen Zusatzbaustein (2), sowie ein Gasschließventil (6), eine Gasdurchflußmeßanordnung (3) und ein Gasschließventil-Steuerungssystem (5), das eine erste Kommunikationsschnittstelle (8) aufweist, welche die Übertragung von Steuerdaten zum oder vom Ventilsteuerungssystem (5) ermöglicht, umfaßt, wobei die Basiszählereinheit (1) so beschaffen ist, daß sie operativ mit dem Zusatzbaustein (2) kombiniert werden kann, um **dadurch** die Funktionalität des Zählers zu erweitern, und wobei der Zusatzbaustein ein Bausteinsteuerungssystem aufweist, welches so eingerichtet ist, daß es die Funktionalität steuern kann, und welches eine zweite Kommunikationsschnittstelle (7) besitzt, über die Kommunikationssignale zur Steuerung des Basiszählereinheit übermittelt werden, **dadurch gekennzeichnet, daß** der Zusatzbaustein so angeordnet ist, daß er einen Schließ-Volumenindexwert errechnet, der an die Basiszählereinheit (1) übermittelt wird, welche diesen Wert mit dem laufenden Volumenindexwert vergleicht und so angeordnet ist, daß sie zur Unterbrechung der Gaszufuhr das Schließventil (6) betätigt, sobald der laufende Volumenindexwert den Schließ-Volumenindexwert erreicht oder überschreitet.

2. Modularer Gaszähler nach Anspruch 1, wobei die Kommunikationsschnittstelle eine optische Schnittstelle ist.

3. Methode zur Steuerung eines modularen Gaszählers, bestehend aus einer Basiszählereinheit (1) und einem Zusatzbaustein (2), die über eine Kommunikationsschnittstelle miteinander kommunizieren, wobei die Methode folgende Schritte umfaßt:
(a) der Zusatzbaustein (2) wird veranlaßt, einen Befehl an die Basiszählereinheit (1) abzusetzen und, wenn das Befehlsformat und die Befehlsstruktur korrekt sind, erlaubt die Basiszählereinheit (1) die Fortführung des Befehls und spricht auf den Schließbefehl bei Erreichen des Volumenindexgrenzwertes an und läßt das Speichern des Schließgrenzwertes in der Basiszählereinheit (1) zu, und,
(b) die Basiszählereinheit (1) wird veranlaßt, den laufenden Volumenindexwert mit dem gespeicherten Schließgrenzwert zu vergleichen und wenn der laufende Volumenindexwert gleich dem gespeicherten Wert oder größer als der gespeicherte Wert ist, veranlaßt die Basiszählereinheit die Betätigung des Schließventils (6), wodurch dieses die Gaszufuhr unterbindet.

4. Methode zur Steuerung eines modularen Gaszählers nach Anspruch 3, wobei der Zusatzbaustein (2) mit der Basiszählereinheit zusammen registriert wird und vor Akzeptierung des Schließwertes bei Erreichen des Volumengrenzwerts eine Prüfung stattfindet, um sich zu vergewissern, daß der Zusatzbaustein in der Basiszählereinheit (1) registriert ist und, wenn dies nicht der Fall ist, das Schließverfahren bei Erreichen des Volumenindexwertes nicht eingeleitet wird.

5. Eine Basiszählereinheit (1) wie für den modularen Gaszähler nach Anspruch 1 definiert.

6. Ein Zusatzbaustein (2) wie für den modularen Gaszähler nach Anspruch 1 definiert.

## Revendications

1. Compteur à gaz modulaire comprenant une unité formant compteur de base (1) et un module d'extension (2), comprenant un robinet d'arrêt du gaz (6), un dispositif de mesure du flux de gaz (3) et un système de commande du robinet d'arrêt du gaz (5), comportant une première interface de communication (8) qui facilite la transmission des données de commande vers ou depuis le système de commande (5), ladite unité formant compteur de base (1) étant adaptée pour être combinée sur le plan opérationnel avec le module d'extension (2), de façon à étendre la fonctionnalité du compteur, ledit module d'extension comprenant un système de commande de module efficace pour commander la fonctionnalité et comprenant une seconde interface de communication (7) par laquelle des signaux de communication sont transmis pour commander le fonctionnement de l'unité formant compteur de base, **caractérisé en ce que** le module d'extension est conçu pour calculer une valeur d'indice du volume d'arrêt, ladite valeur étant communiquée à l'unité formant module de base (1), qui surveille cette valeur par rapport à une valeur d'indice du volume en cours, et est prévu pour activer le robinet d'arrêt (6) afin de couper l'alimentation en gaz lorsque la valeur d'indice du volume en cours est supérieure ou égale à la valeur d'indice du volume d'arrêt.

2. Compteur à gaz modulaire tel que revendiqué dans la revendication 1, dans lequel l'interface de communication est une interface optique.

3. Procédé de commande d'un compteur à gaz modulaire comportant une unité formant compteur de base (1) et un module d'extension (2), la communication entre eux étant prévue par une interface de communication, le procédé comprenant les étapes suivantes :
(a) entraîner l'émission par le module d'extension (2) d'une commande à l'unité formant module de base (1), et si le format et la structure de commande sont corrects, l'unité formant module de base (1) permet la poursuite de la commande, et l'unité formant module de base (1) répond à la commande d'arrêt du seuil d'indice de volume et permet la mémorisation de la valeur d'arrêt seuil dans l'unité formant compteur de base (1), et
(b) entraîner la vérification par l'unité formant module de base (1) de la valeur d'indice du volume en cours par rapport à la valeur d'arrêt seuil mémorisée, et lorsque la valeur d'indice du volume en cours est la même que la valeur mémorisée ou est supérieure à la valeur mémorisée, l'unité formant module de base provoque le fait que le robinet d'arrêt (6) s'active, fermant alors l'alimentation en gaz.

4. Procédé de commande d'un compteur à gaz modulaire tel que revendiqué dans la revendication 3, dans lequel on entraîne l'enregistrement du module d'extension (2) avec l'unité formant compteur de base, et avant que la valeur d'arrêt seuil de l'indice du volume soit acceptée, une vérification est réalisée pour déterminer si le module d'extension est enregistré avec l'unité formant compteur de base (1), et s'il ne l'est pas, la procédure d'arrêt sur indice de volume n'est pas mise en oeuvre.

5. Unité formant compteur de base (1) telle que définie dans le compteur à gaz modulaire revendiqué dans la revendication 1.

6. Module d'extension (2) tel que défini dans le compteur à gaz modulaire revendiqué dans la revendication 1.
